# EUROPÄISCHE PATENTSCHRIFT

(11) **EP 4 384 720 B1**
(45) Veröffentlichungstag und Bekanntmachung des Hinweises auf die Patenterteilung: **02.07.2025**
(21) Anmeldenummer: 22762074.7
(22) Anmeldetag: 10.08.2022
(51) Int. Cl.: F16B 7/04

(54) **VORRICHTUNG ZUM VERBINDEN ZUMINDEST ZWEIER KÖRPER**
DEVICE FOR CONNECTING AT LEAST TWO BODIES
DISPOSITIF DE LIAISON D'AU MOINS DEUX CORPS

(30) Priorität: 12.08.2021 DE 202021104309 U
(43) Veröffentlichungstag der Anmeldung: 19.06.2024
(73) Patentinhaber: Geßner, Jens, 65347 Eltville am Rhein (DE)
(72) Erfinder: Geßner, Jens, 65347 Eltville am Rhein (DE); Bown, Robert, 65366 Geissenheim (DE)
(74) Vertreter: Richardt Patentanwälte PartG mbB
(86) Internationale Anmeldenummer: PCT/EP2022/072443
(87) Internationale Veröffentlichungsnummer: WO 2023/017080

(56) Entgegenhaltungen:
- EP-B1- 1 058 067
- DE-A1- 102015 115 584
- DE-A1- 2 713 669
- DE-T2- 60 030 202

## Beschreibung

Die Erfindung betrifft eine Vorrichtung zum Verbinden zumindest zweier Körper miteinander. Solche Vorrichtungen sind beispielsweise in Form von Kreuzschellen bekannt, die das Verbinden eines Rohrs von kreisförmigem Umfangsquerschnitt mit einem ähnlichen Rohr ermöglichen, dies auch bei Überkreuzverlauf der beiden Rohre.

Bei solchen Schellen werden typischerweise Schrauben eingesetzt. Die Schellen weisen zwei Hälften auf, die sich an die kreisförmige Oberflächige jeweils hälftig anschmiegen können. Auf diese Weise sind die Verbindungselemente nur jeweils für eine Größe eines Rohres ausgelegt.

DE 27 13 669 A1 offenbart eine Rohr-Verbindungskupplung . DE 600 30 202 T2 offenbart einen Stangenhalter.

Die Erfindung stellt eine Vorrichtung zum Verbinden zumindest zweier Körper miteinander bereit, mit einem oberen Vorrichtungsteil zum Verbinden der Vorrichtung mit einem ersten Körper und mit einem unteren Vorrichtungsteil zum Verbinden der Vorrichtung mit einem zweiten Körper, wobei der obere Vorrichtungsteil und der untere Vorrichtungsteil jeweils auf zwei gegenüberliegenden Seiten offen sind, um die Verbindung mit einem ersten bzw. zweiten Körper zu ermöglichen, welcher länger als die Vorrichtung ist, und wobei der obere Vorrichtungsteil und der untere Vorrichtungsteil zwei Seitenarme zum zumindest teilweisen Umschließen eines jeweiligen Körpers aufweisen. Bei der Erfindung weisen beide Seitenarme einen beweglichen Flügel auf, welche eine Anpassung der Vorrichtung an unterschiedliche Körper ermöglichen.

Bei der Vorrichtung sind der obere Vorrichtungsteil und der untere Vorrichtungsteil jeweils gesonderte Abschnitte, jeweils zum Verbinden mit einem anderen Körper, so dass man die Vorrichtung zunächst an dem einen Körper befestigen kann und sodann die Vorrichtung mit dem einen Körper an dem anderen Körper befestigen kann. Dadurch, dass der obere Vorrichtungsteil und der untere Vorrichtungsteil jeweils auf zwei gegenüberliegenden Seiten offen sind, kann ein langgestreckter Körper, wie etwa ein Rohr, ein Kabel oder dergleichen als erster und/oder zweiter Körper, der mit dem jeweiligen anderen Körper zu verbinden ist, fungieren: Die Vorrichtung sitzt so nur an einem kleinen Abschnitt des Rohrs oder Kabels oder dergleichen an. Die beiden Seitenarme geben der Vorrichtung einen festen Halt. Durch den beweglichen Flügel ist für erhöhte Flexibilität gesorgt: Lässt sich der Flügel nach außen bewegen, kann der jeweilige Körper (zumindest abschnittsweise) etwas breiter sein als die Vorrichtung. Lässt sich der Flügel nach innen bewegen, kann der bewegliche Körper (zumindest abschnittsweise) etwas schmäler sein als die Vorrichtung.

Gemäß einer Ausführungsform sind der obere und der untere Vorrichtungsteil symmetrisch zueinander ausgebildet. In diesem Fall muss also die Vorrichtung einfach nur längs einer Achse, die durch die beiden offenen Seiten bestimmt ist, um 180° gedreht werden und wird so perfekt wieder in sich überführt.

Bei einer anderen Ausführungsform sind der obere und der untere Vorrichtungsteil von gleicher Form, die jeweiligen offenen gegenüberliegenden Seiten sind jedoch bei der unteren Vorrichtung gegenüber den offen liegenden Seiten der oberen Vorrichtung verdreht, und dies vorzugsweise um 90°. Dies ermöglicht das Verbinden von Körpern, die nicht parallel - wie bei der vorher genannten Vorrichtung - zueinander verlaufen, sondern eben in einem Winkel wie bei der Vorrichtung. Dies gilt insbesondere für sich kreuzende längliche Körper, wie sich kreuzende Rohre, Kabel und dergleichen.

Bei einer anderen Ausführungsform sind der obere und der untere Vorrichtungsteil derart unterschiedlich, dass sich die Vorrichtungsteile nicht aufeinander durch Drehungen im Raum abbilden lassen. Man kann dann zwar durch eine Mehrzahl von Drehungen die Vorrichtung in eine Lage überführen, in der eine Rolle des ersten Vorrichtungsteils und des zweiten Vorrichtungsteils vertauscht sind, die Gesamtkontur ändert sich aber hierbei. Bei einer Ausführungsform hiervon sind der obere und der untere Vorrichtungsteil zwar zu jeweiligen selben Seiten hin offen, gehen aber gerade nicht um Drehung um 180° wieder in dieselbe Form über: Oben sieht die Vorrichtung anders aus als unten.

Vorzugsweise ist ein beweglicher Flügel an beiden Vorrichtungsteilen angeordnet, und vorzugsweise weist jeder der Vorrichtungsteile einen beweglichen Flügel auf. Besonders vorzugsweise sind somit an beiden Armen beider Vorrichtungsteile bewegliche Flügel angeordnet, insgesamt also vier bewegliche Flügel vorhanden. Das sorgt für besonders hohe Flexibilität hinsichtlich des Verbindens der unterschiedlichsten Arten von Körpern.

Die Flügel können aufgrund einer Materialschwächung beweglich sein. Dann lässt sich die Vorrichtung besonders einfach herstellen - weil etwa auf ein gesondertes Scharnier oder derartiges verzichtet werden kann.

Bei einer Ausführungsform besteht die Vorrichtung teilweise und vorzugsweise vollständig aus Kunststoff, ist insbesondere spritzgegossen oder extrudiert, wobei hierfür ein einziger oder eine Mischung verschiedener Kunststoffe verwendet werden kann. Im Fall von Spritzguss können Rippen und/oder Ausnehmungen vorgesehen sein, um der Schrumpfung entgegenzuwirken. Die Schwächungsstelle kann dann einfach dadurch bereitgestellt sein, dass der Kunststoff an dem Fuß der Flügel besonders dünn ist und daher eine gewisse Elastizität aufweist, die der restliche Flügel - weil dort der Kunststoff breiter gespritzt ist - nicht aufweist.

Alternativ kann die Vorrichtung auch aus Metall hergestellt sein, insbesondere aus Eisenblech oder Aluminium und dergleichen. Bei einer solchen Vorrichtung wäre es vorteilhaft, die Schwächung zur Herstellung der Beweglichkeit der Flügel erst nach einem Zusammensetzen oder Gießen oder dergleichen vorzunehmen, z.B. durch eine Prägung mit einem Prägestempel, wodurch etwa ein Blech mit einer Prägekerbe versehen wird und dadurch lokal dünner wird.

Bei einer Ausführungsform weisen der obere Vorrichtungsteil und/oder der untere Vorrichtungsteil in einer jeweiligen Längsrichtung von einer der jeweiligen offenen Seiten zur anderen der jeweiligen offenen Seiten einen über einen Teil der Längserstreckung (also längs der Längsrichtung) konstanten Querschnitt auf. (Dann lässt sich der gesamte obere Vorrichtungsteil oder der gesamte untere Vorrichtungsteil auch als Prisma im geometrischen Sinne definieren).

Bei einer Ausführungsform zu Letzterem ist der konstante Querschnitt in sich spiegelsymmetrisch, d.h. die beiden Arme mit den beiden Flügeln sind durch Spiegelung um eine entsprechende (typischerweise vertikale) Achse aufeinander abbildbar.

Bei einer weiteren Ausführungsform hierzu umfasst die Vorrichtung eine längs der Längsrichtung verlaufende Nut, vorzugsweise mittig angeordnet, für die Aufnahme einer Bandschelle oder eines Kabelbinders in dem oberen und/oder dem unteren Vorrichtungsteil. Auf diese Weise ist es nicht notwendig, dass der bewegliche Flügel selbst eine Klemmkraft ausübt: Der bewegliche Flügel kann dadurch besonders geeignet ausgebildet sein, sich an unterschiedliche Arten von erstem oder zweitem Körper anzupassen, und der eigentliche Halt wird mittels einer durch die Nut (z.B. auf der Gegenseite) geführten Bandschelle oder einem Kabelbinder oder ein sonstiges streifenförmiges Verbindungselement überhaupt erst gewährleistet . Bei diesem Aspekt der Erfindung wird bewusst zum Zwecke der flexiblen Handhabung und des guten Haltes auf die Verwendung nur eines Bauteils verzichtet: Die Vorrichtung alleine sorgt für die Anpassung, und die Bandschelle, der Kabelbinder oder das sonstige Element sorgt für den guten Halt.

Auf jeder Seite der Nut kann eine Stufe vorgesehen sein, damit sich ein passender Körper gut anschmiegen kann oder ei solcher gehalten werden kann. Es können auch mehrere solcher Stufen vorgesehen sein, wobei jede Stufe für einen bestimmten Bereich an einer Größe eines Körpers angepasst ist (zumindest des Abschnitts eines solchen Körpers, der in die Vorrichtung gesteckt wird). Zur weiteren Flexibilität und Erhöhung der Haltekraft kann eine Schräge vorgesehen sein, vorzugsweise so, dass sich der Fuß des beweglichen Flügels (also insbesondere die Stelle einer Schwächung im Material der Vorrichtung) oberhalb der Schräge befindet.

Am freien Ende eines Flügels und vorzugsweise aller Flügel kann ein Wulst vorgesehen sein, um die Flügel besser anzugreifen. Vorzugsweise ist in einem solchen Wulst zur weiter verbesserten Handhabung eine Aussparung ausgebildet.

Bei einer anderen Ausführungsform der oben genannten Ausführungsformen mit über eine Längsausstreckung konstantem Querschnitt sind gleich zwei Nuten in einem Vorrichtungsteil vorgesehen. Auf diese Weise können entweder zwei Körper in diesem Vorrichtungsteil gehalten werden und damit insgesamt drei oder vier Körper miteinander verbunden werden, oder es können jeweilige Bandschellen oder Kabelbinder oder dergleichen paarweise in die Nuten eingreifen und so den Halt erhöhen.

Bei einer bevorzugten Variante dieser Ausführungsform ist zwischen den beiden Nuten ein Steg vorgesehen, um eben möglicherweise gehaltene Körper voneinander zu trennen. Zur weiteren Flexibilisierung sind zwei Schrägen/Abschrägungen vorgesehen, die zu dem mittigen Steg hinführen.

Die Flexibilität der Vorrichtung ist besonders hoch, wenn ein Flügel in jeder Grundstellung vertikal hochsteht. Der Flügel kann dann nach innen einklappbar oder nach außen ausklappbar sein. Vorzugsweise ist vorgesehen, dass zumindest eine der beiden Varianten gilt: a) Der Flügel ist nach innen um mindestens 45°, vorzugsweise um mindestens 60° und weiter vorzugsweise um mindestens 90° einklappbar, dann lassen sich kleinere Körper besser halten. Alternativ oder zusätzlich ist b) der Flügel nach außen um mindestens 45°, vorzugsweise um mindestens 60° und weiter vorzugsweise mindestens 90° ausklappbar, um sich an größere Körper anzuschmiegen. Die Ausklappbarkeit um 90° ermöglicht sogar das Verbinden mit einer ebenen Oberfläche, z.B. durch Kleben, Antackern oder anderen Befestigungsmethoden.

Prinzipiell kann in der Vorrichtung vorzugsweise eine Grundplatte definiert werden, z.B. als rechteckige Platte, wobei eine solche Grundplatte nicht als eigentliches Bauteil vorgesehen sein muss, sondern lediglich in der Vorrichtung identifizierbar sein kann, z.B. durch parallele Grundflächen von Nuten als Oberfläche der Grundplatte oder ähnliches. Eine solche Grundplatte kann bei einer Ausführungsform die gesamte Breite der Vorrichtung einnehmen. Dann ist für eine erhöhte Stabilität gesorgt.

Alternativ kann sich die Grundplatte nur über einen Teil der Vorrichtung erstrecken. Dann ist noch Platz für eine seitliche Nut, die die Flexibilität zum Verbinden mit Bandschellen, Kabelbindern und dergleichen erhöht. Die seitliche Nut kann auf zwei Seiten ausgebildet sein.

Bei einer Ausführungsform umfasst die Vorrichtung zumindest ein Haltemittel für einen Kabelbinder oder eine Rohrschelle, der/welche somit bei der Montage an der Vorrichtung gehalten werden kann, damit der Monteur die Hände für Anderes frei hat. Die Haltemittel ermöglichen eine Vormontage des Kabelbinders an der Vorrichtung, was für den Fertigungsprozess und die Handhabung vorteilhaft ist.

Hierbei kann vorgesehen sein, dass das Haltemittel zumindest eine Durchführung umfasst. Der Kabelbilder lässt ich dann über eine erste Öffnung in die Durchführung einführen und durchführen und so besser halten, etwa von einer zweiten Öffnung der Durchführung her, an der der Kabelbinder wieder aus der Durchführung austritt.

Es kann hierbei zudem eine Durchführung der zumindest einen Durchführung unterhalb des Bodens des jeweiligen Vorrichtungsteils ausgebildet sein. So hat der Kabelbinder schon vorläufig für die spätere Montage die richtige Verlaufsrichtung.

Dabei kann insbesondere der Boden eine Nut (wie obig diskutiert) aufweisen und die Nut kann durch eine elastische Membran bereitgestellt sein, welche vorzugsweise nach unten gewölbt ist. Dies kann dazu dienen, um den Kabelbinder zu verklemmen, dies auch insbesondere für unterschiedlich große Kabelbinderquerschnitte zu ermöglichen.

Bei einer Ausführungsform weist der Boden in der jeweiligen Längsrichtung des oberen Vorrichtungsteils und/oder des unteren Vorrichtungsteils zumindest eine Unterbrechung auf.

Möglich ist auch, dass eine Durchführung der zumindest einen Durchführung als Aussparung an einem Steg ausgebildet ist, wobei der Steg vorzugsweise an der Außenseite der Vorrichtung angeordnet ist, sich insbesondere in der Längsrichtung an der Außenseite der Vorrichtung erstreckt, wobei optional der Steg durch eine elastische Membran bereitgestellt ist, welche vorzugsweise in Richtung der Durchführung gewölbt ist. Auch diese Membran kann dazu dienen, um den Kabelbinder zu verklemmen, dies auch insbesondere für unterschiedlich große Kabelbinderquerschnitte zu ermöglichen.

Nach einer Ausführungsform kann die Stufe und/oder die Schräge durch eine Vielzahl von voneinander in der Längsrichtung beabstandeten Rippen realisiert sein.

Durch die Erfindung wird auch ein Verbund eines ersten Körpers und eines zweiten Körpers bereitgestellt, wobei der erste und der zweite Körper mit einer erfindungsgemäßen Vorrichtung verbunden sind.

Beispielsweise kann der erste Körper ein Rohr mit kreisförmigem Umfangsquerschnitt sein und der erste Körper breiter sein als die Vorrichtung. Dann sind die zwei beweglichen Flügel nach außen geklappt. Alternativ kann das Rohr schmäler sein als die Vorrichtung, dann sind die beiden beweglichen Flügel nach innen geklappt. Ferner kann es möglich sein, dass der erste Körper sich auf beiden Schrägen des oberen Vorrichtungsteils abstützt. Bei einer Ausführungsform ist der erste Körper nicht sehr hoch, dann lassen sich die zwei beweglichen Flügel nach innen klappen und ihre Innenflächen schmiegen sich an den ersten Körper an, z.B. bei einem plattenförmigen ersten Körper kann eine ebene Innenoberfläche der ersten Flügel unmittelbar auf der Oberfläche des plattenförmigen ersten Körpers aufliegen. Es ist auch möglich, dass der sich auf den Schrägen abstützende erste Körper vertikale Seitenwände aufweist. Die beiden beweglichen Flügel müssen dann nicht oder nur kaum geklappt werden, beispielsweise um nicht mehr als 10° nach innen oder um nicht mehr als 10° nach außen. Bei einer Ausführungsform ist ferner der erste Vorrichtungsteil in einem Innenraum des ersten Körpers (ein Hohlrohr oder dergleichen) abgestützt, wobei die Flügel eben zum Abstützen dienen und sich etwa bis hin zu einer vertikalen Seitenwand des Hohlkörpers erstrecken.

Zur Erfindung gehört das Bereitstellen eines Sets aus einer erfindungsgemäßen Vorrichtung mit dazu passenden Bandschellen bzw. Kabelbindern, insbesondere so passend, dass die Bandschellen, Kabelbinder oder sonstige Verbindungselemente eine Breite haben, die im Wesentlichen zur Nut passt, d.h. die Bandschellen, Kabelbinder oder dergleichen können in der Nut geführt sein, wenn sie geringfügig schmäler als die Nut sind.

Nachfolgend werden bevorzugte Ausführungsformen der Erfindung unter Bezug auf die Zeichnung näher beschrieben, in der:
- Fig. 1a: eine erste Ausführungsform 100 einer erfindungsgemäßen Vorrichtung zeigt,
- Fig. 1b: eine zweite Ausführungsform einer erfindungsgemäßen Vorrichtung 100a zeigt,
- Fig. 2a1: das Verbinden einer dritten Ausführungsform 100b der erfindungsgemäßen Vorrichtung mit einem Körper 200 von flacher Oberfläche in perspektivischer Darstellung zeigt,

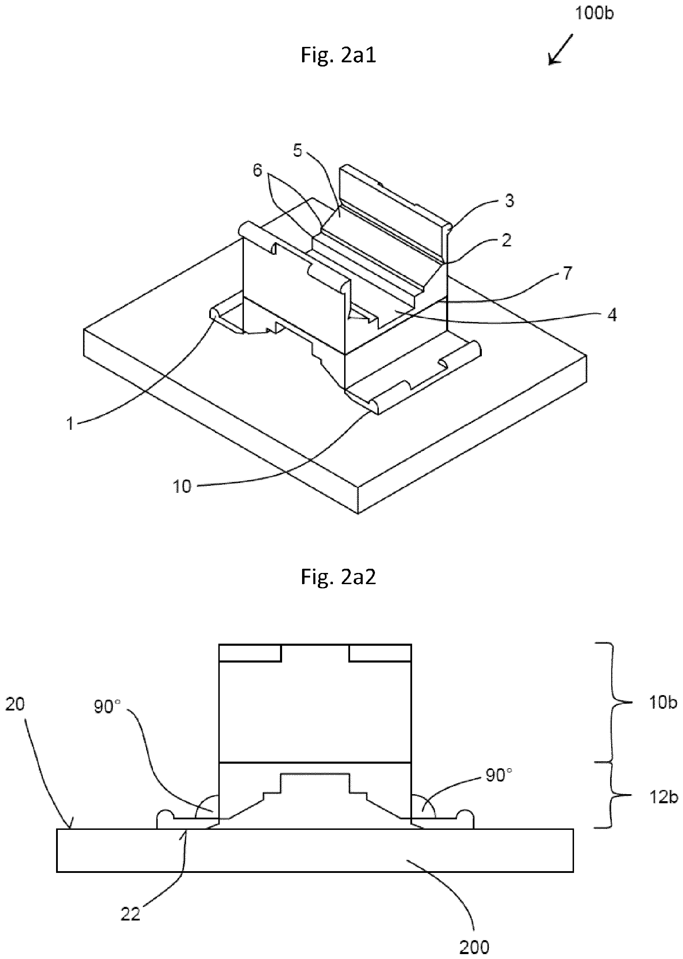

- Fig. 2a2: das Verbinden der dritten Ausführungsform 100b der erfindungsgemäßen Vorrichtung mit einem Körper 200 von flacher Oberfläche in Seitenansicht zeigt,

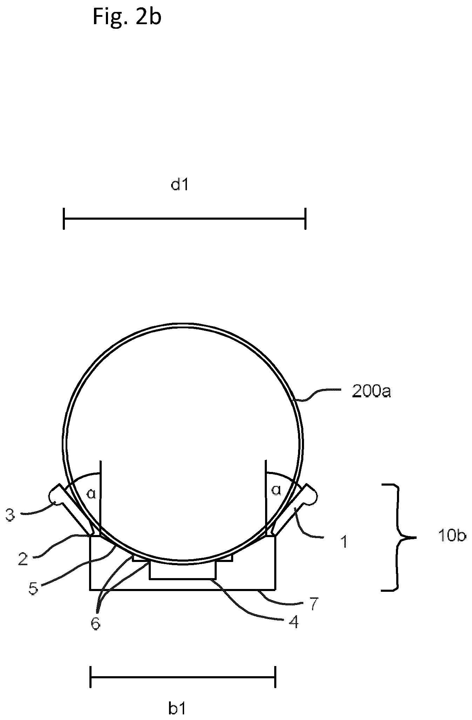

- Fig. 2b: das Verbinden der Vorrichtung 100b gemäß der dritten Ausführungsform mit einem rohrförmigen Körper 200a von großem Querschnitt zeigt,

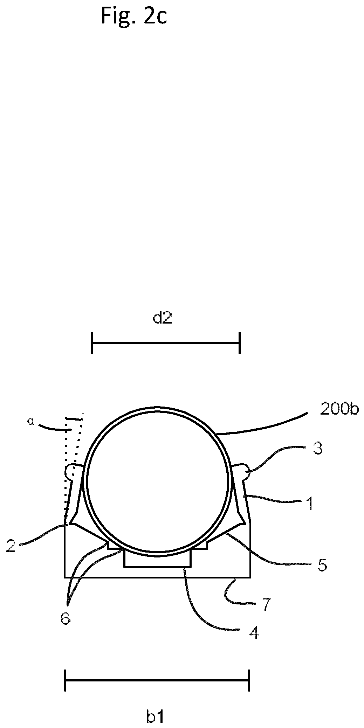

- Fig. 2c: das Verbinden der Vorrichtung 100b gemäß der dritten Ausführungsform mit einem rohrförmigen Körper 200b von kleinem Querschnitt zeigt,

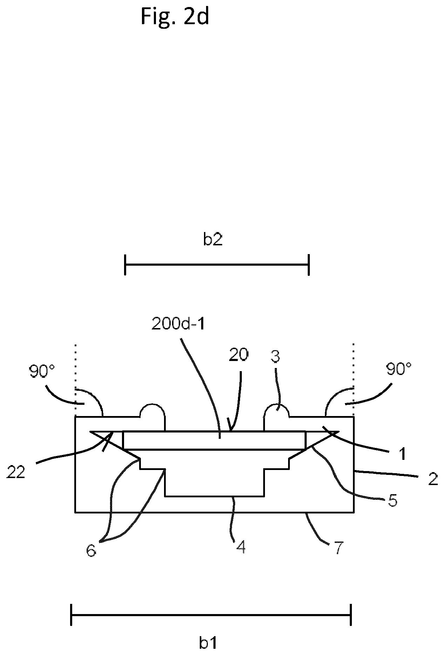

- Fig. 2d: das Verbinden der Vorrichtung 100b gemäß der dritten Ausführungsform mit einem plattenförmigen Körper 200d-1 zeigt,

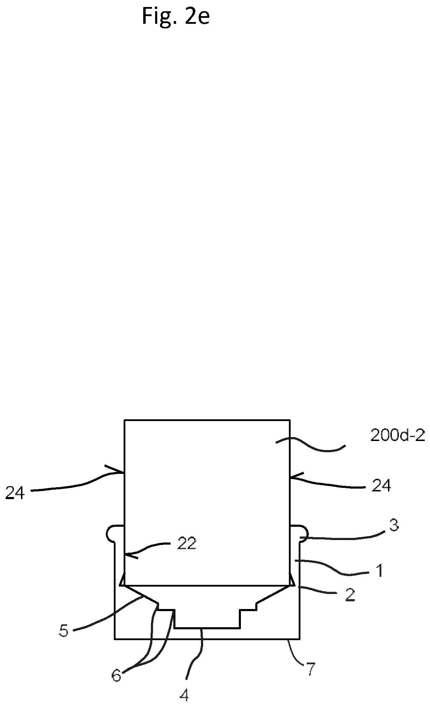

- Fig. 2e: das Verbinden der Vorrichtung 100b gemäß der dritten Ausführungsform mit einem Körper 200d-2 von rechtwinkligem Querschnitt zeigt,

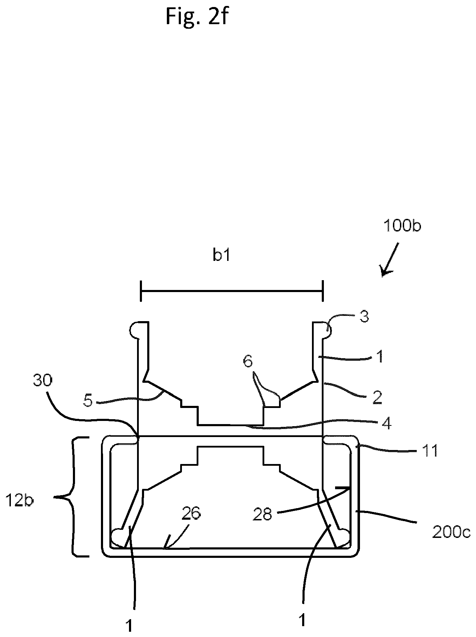

- Fig. 2f: die Vorrichtung 100b gemäß der dritten Ausführungsform aus Fig. 2a zeigt, wie sie in einem Innenraum eines Hohlkörpers 200c abgestützt ist,

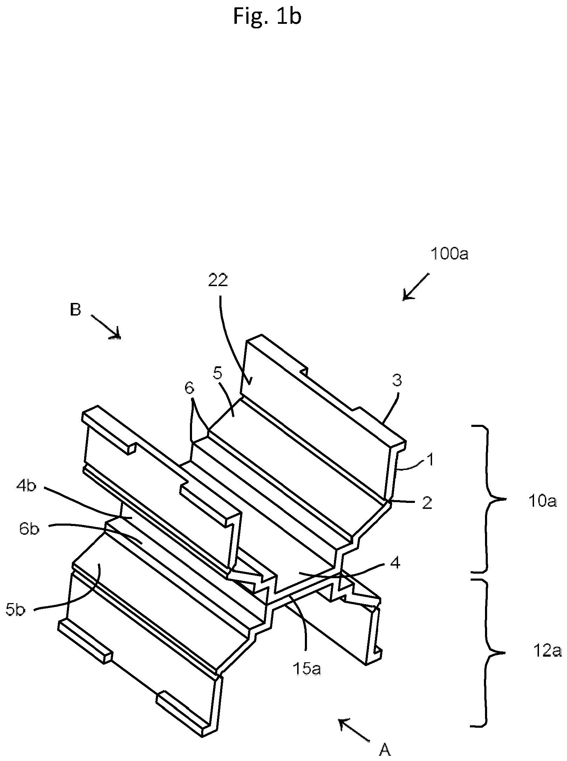

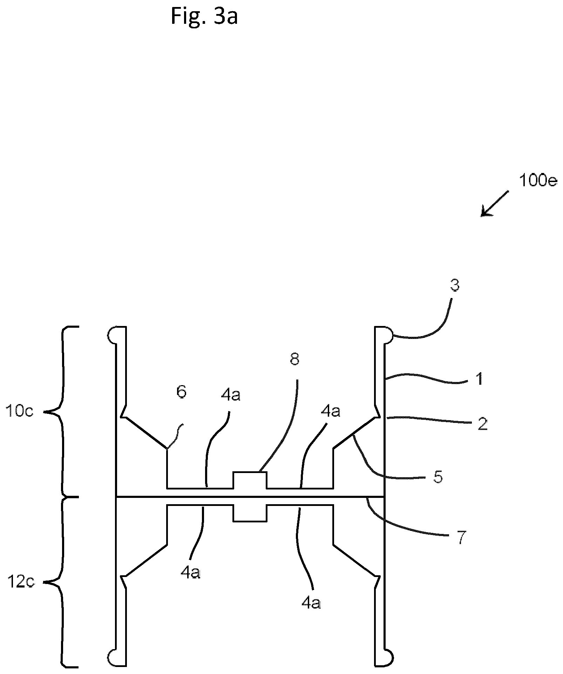

- Fig. 3a: eine erste Abwandlungsform 100c der Vorrichtung aus Fig. 1b zeigt,

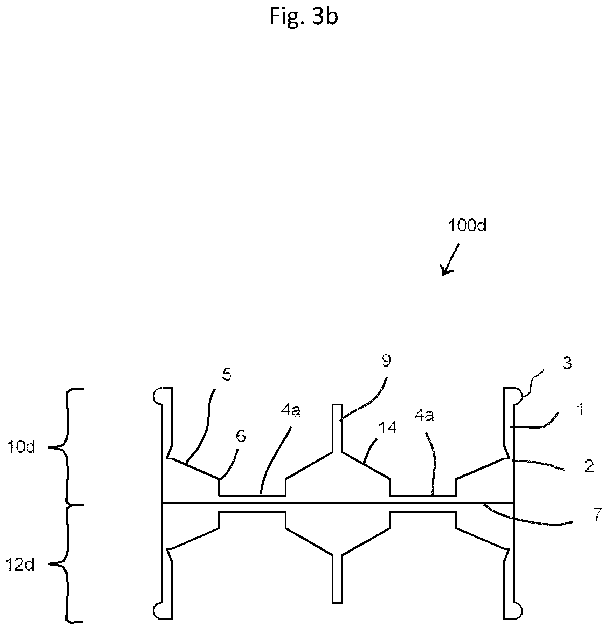

- Fig. 3b: eine zweite Abwandlungsform 100d der Vorrichtung aus Fig. 1b zeigt,

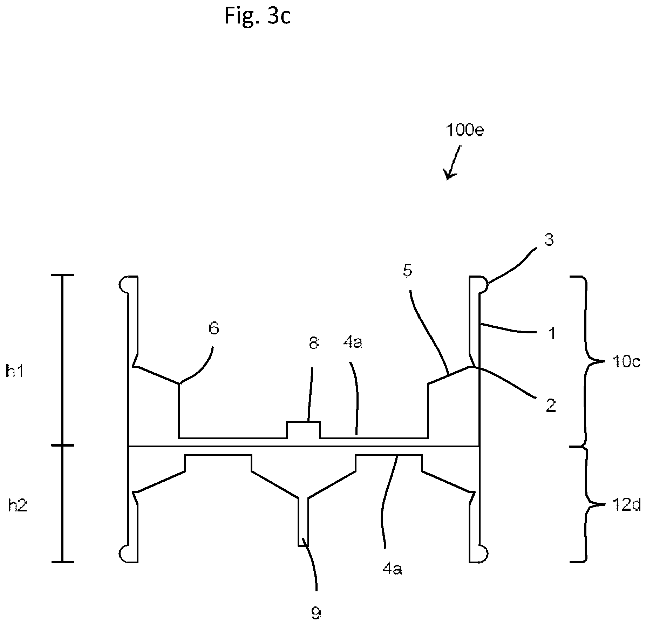

- Fig. 3c: eine dritte Abwandlungsform 100e der Vorrichtung aus Fig. 1b zeigt,

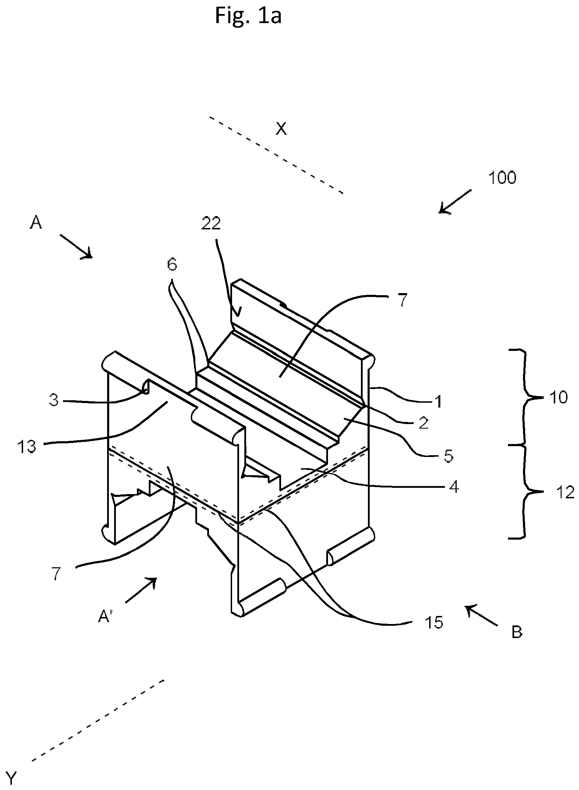

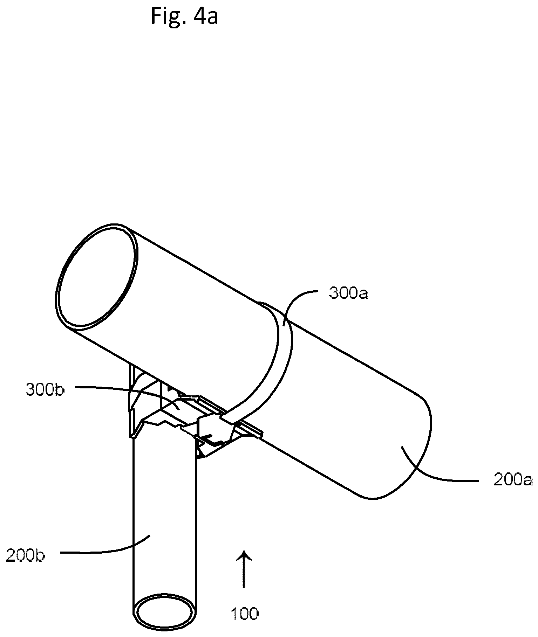

- Fig. 4a: den Verbund zweier rohrförmiger Körper 200a, 200b mithilfe der Vorrichtung 100 aus Fig. 1a in perspektivischer Darstellung zeigt,

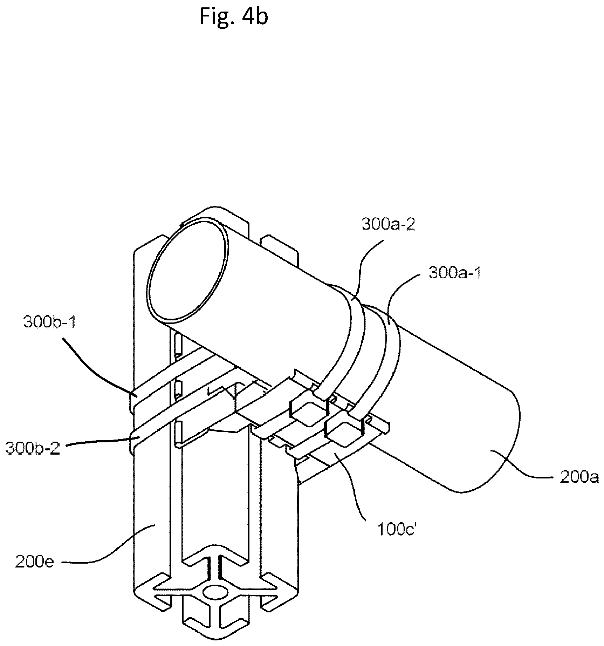

- Fig. 4b: den Verbund eines rohrförmigen Körpers mit einem Montageprofil unter Verwendung einer Abwandlung 100c' der Vorrichtung 100c aus Fig. 3a in perspektivischer Darstellung zeigt,

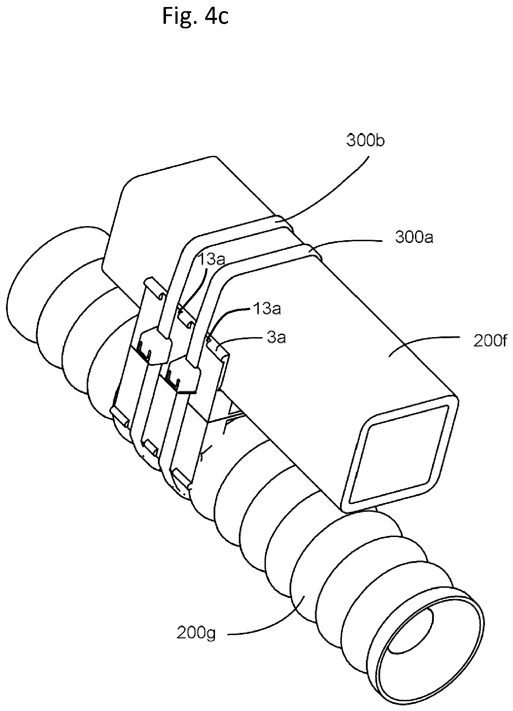

- Fig. 4c: die Verbindung eines quaderförmigen Rohrs 200f mit einem Schlauch 200g unter Verwendung einer Vorrichtung nach Art der Vorrichtung 100 aus Fig. 1a in perspektivischer Darstellung zeigt.

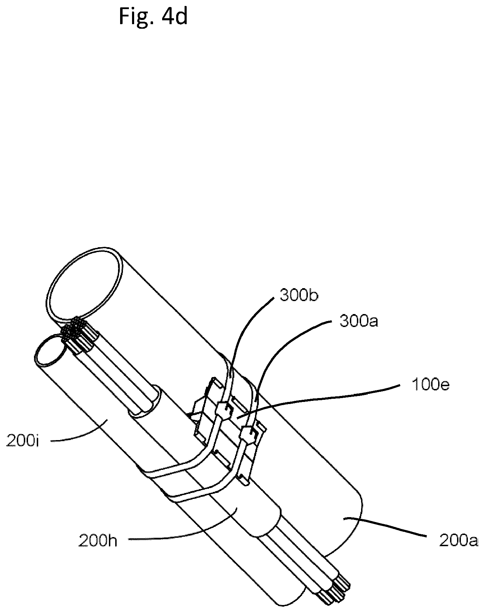

- Fig. 4d: die Verbindung eines Rohrs 200a mit großem Querschnitt mit einem Rohr 200i mit kleinem Querschnitt und einem Kabelstrang 200a mit ebenfalls kleinem Querschnitt durch ein und dieselbe Vorrichtung 100e aus Fig. 3c in perspektivischer Darstellung zeigt,

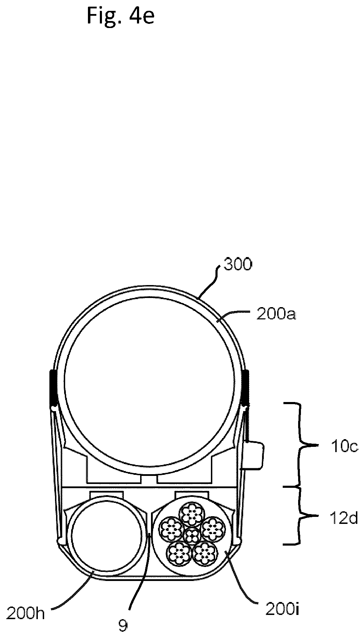

- Fig. 4e: den Verbund aus Fig. 4d im Schnitt zeigt.

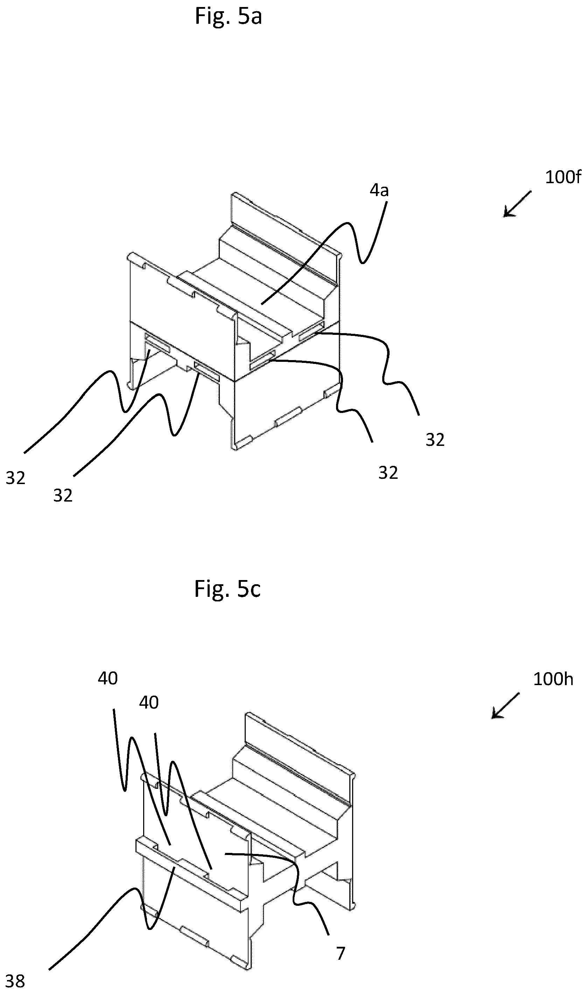

- Fig.5a: eine Abwandlung 100f der Vorrichtung aus Fig. 1a in perspektivischer Darstellung zeigt,

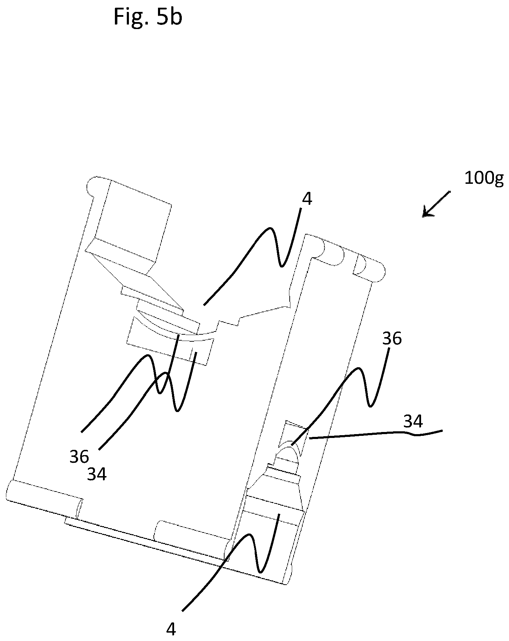

- Fig. 5b: eine weitere Abwandlung 100g der Vorrichtung aus Fig. 1a in perspektivischer Darstellung zeigt,
- Fig. 5c: eine Abwandlung 100h der Vorrichtung aus Fig. 3a in perspektivischer Darstellung zeigt,

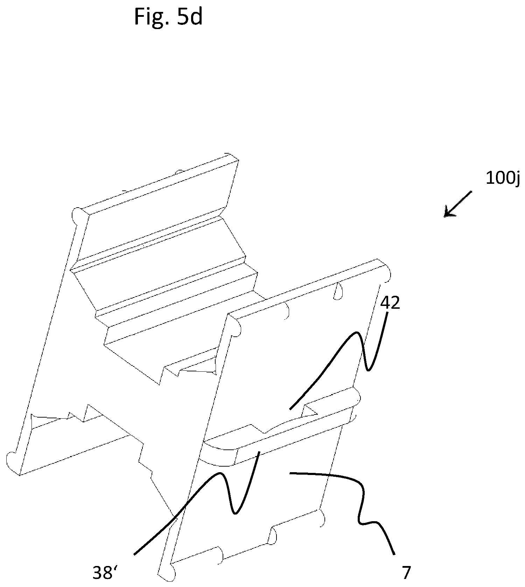

- Fig. 5d: eine weitere Abwandlung 100j der Vorrichtung aus Fig.3a in perspektivischer Darstellung zeigt,

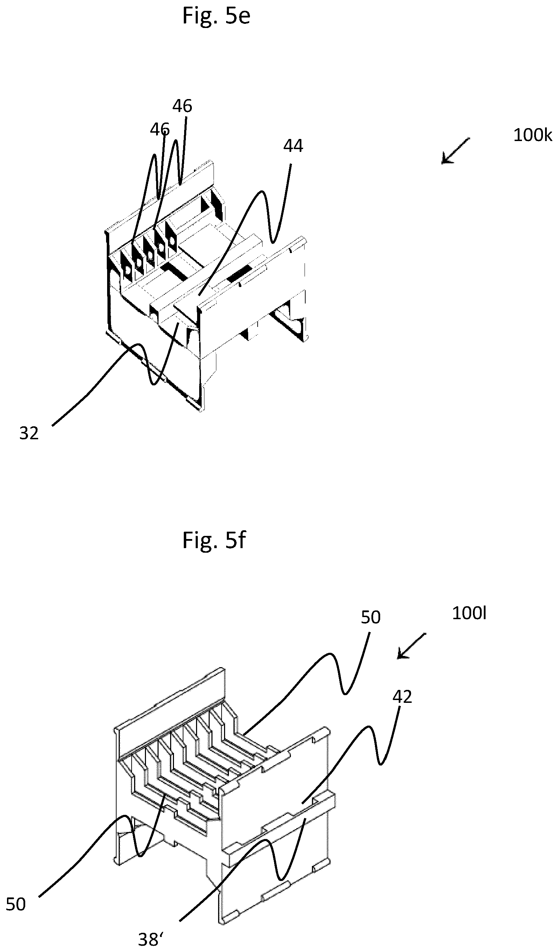

- Fig. 5e: eine weitere Abwandlung 100k der Vorrichtung aus Fig. 1a in perspektivischer Darstellung zeigt,
- Fig. 5e: eine weitere Abwandlung 100l der Vorrichtung aus Fig. 3a in perspektivischer Darstellung zeigt.

Die in Fig. 1a gezeigte Vorrichtung 100 ist beispielsweise aus Kunststoff spritzgegossen oder aus Aluminium druckgegossen und weist einen oberen Vorrichtungsteil 10 und einen unteren Vorrichtungsteil 12 auf. Der obere Vorrichtungsteil 10 und der untere Vorrichtungsteil 12 sind von identischer Form insofern, als dass die Vorrichtung durch Drehung um 180° und weitere Drehung um 90° wieder in sich überführt werden kann, wobei dann nur der obere Vorrichtungsteil 10 und der Vorrichtungsteil 12 ihre Rollen vertauscht haben. Der obere Vorrichtungsteil 10 ist zu den Seiten A und B hin offen, wodurch eine Längsachse X definiert ist, längs der der obere Vorrichtungsteil 10 von im Wesentlichen konstantem Querschnitt ist (eine Ausnahme ist im Bereich 13 gegeben, auf den später eingegangen wird).

Der obere Vorrichtungsteil 10 ist zudem spiegelsymmetrisch: Mittig weist er eine Nut 4 auf. Zu beiden Seiten der Nut 4 sind spiegelsymmetrisch Stufen 6 angeordnet. Auf die Stufen 6 folgen Abschrägungen/Schrägen 5. An die Schrägen 5 schließt sich eine Schwächungsstelle 2 an, die ihrerseits am Fußbereich eines jeweiligen Flügels 1 ausgebildet ist. Durch die Schwächungsstelle 2 lässt sich der Flügel 1 jeweils verschwenken, wie später ausführlicher und in Bezug auf die Figuren 2a bis f dargestellt wird.

Am freien Ende der Flügel 1 befindet sich jeweils ein Wulst 3, wobei in einem längs der Längsrichtung mittleren Abschnitt 13 der Wulst eine Aussparung aufweist, damit beispielsweise mit zwei Fingern (Daumen und Zeigefinger) die Vorrichtung erfasst werden kann und zugleich die Flügel nach innen gedrückt werden können, und so fort.

Der untere Vorrichtungsteil 12 ist, wie gesagt, baugleich zum oberen Vorrichtungsteil 10, wobei lediglich die Symmetrien anders sind: Die Längsrichtung ergibt sich zu den offenen Enden A' und B' hin längs der Achse Y. Die Spiegelsymmetrie ist gleichermaßen vorhanden. Virtuell lässt sich eine Grundplatte 15 definieren, deren Oberseite den Grund der Nut 4 des oberen Vorrichtungsteils 10 bildet und deren Unterseite den Grund der Nut 4 des unteren Vorrichtungsteils 12 bildet. (Der die Vorrichtungsteile 10 und 12 voneinander trennende Strich in der Zeichnung ist lediglich zur Veranschaulichung gezeigt; bei einem Spritzguss aus Kunststoff oder Druckguss aus Aluminium lassen sich die einzelnen Vorrichtungsteile nicht mehr als eigentlich getrennt ansehen.)

Bei einer zweiten Ausführungsform, die in Fig. 1b gezeichnet ist und dort mit 100b bezeichnet ist, sind der erste (obere) Vorrichtungsteil 10a und der zweite (untere) Vorrichtungsteil 12a abermals baugleich, die offenen Seiten sind jedoch bei beiden Fällen die Seiten A und B, so dass die Vorrichtung durch Drehen um 180° wieder in sich überführbar ist, wobei dann die Rollen des oberen Vorrichtungsteils 10a und 12a vertauscht sind. Die Arme 7 sind vorliegend nicht an einer Grundplatte 15 ausgebildet, die sich wie in Fig. 1a über die gesamte Breite der Vorrichtung 100 erstreckt. Stattdessen erstreckt sich die Grundplatte 15a bei der Vorrichtung 100a nur über einen Teil der Breite der Vorrichtung, so dass auch seitliche Nuten 4b ausgebildet sind, wobei sich an diesen seitlichen Nuten 4b ihrerseits den Stufen 6 entsprechende Außenstufen 6b anschließen, die Schrägen 5b nach Art der Schrägen 5 und dergleichen.

Fig. 2a1 und 2a2 zeigt eine dritte Ausführungsform 100b der Vorrichtung, die jeweils den oberen Vorrichtungsteil 10 aus Fig. 1a oben und unten aufweist, d.h. in den einzelnen Vorrichtungsteilen ausgebildet ist, wie bei Fig. 1a.

Die nachfolgend beschriebene Verbindung mit einem jeweiligen ersten Körper lässt sich naturgemäß entsprechend mit den Vorrichtungen 100 und 100a aus Figuren 1a und 1b vornehmen.

Die Flügel 1 des unteren Vorrichtungsteils 12b sind zur Verbindung mit dem Körper 200, der eine ebene Oberfläche 20 aufweist, um exakt 90° nach außen gedreht. Die Flügel weisen eine innere Oberfläche 22 auf, die ebenfalls eben ist (siehe auch bei den entsprechenden Vorrichtungen 100 und 100a in Fig. 1a und 1b), und diese inneren Ebenen 22 schmiegen sich genau an die ebene Oberfläche 20 des ersten Körpers 200 an. Die Vorrichtung 100b kann mit ihren Flügeln 1 an dem ersten Körper 200 befestigt werden, z.B. durch Ankleben, Antackern oder sonstige Verbindungsverfahren.

Die Fig. 2b zeigt die Vorrichtung 100b aus Fig. 2a, hier jedoch wie in Fig. 2c bis e aus Gründen der Einfachheit der Darstellung lediglich deren oberen Vorrichtungsteil 10b, ohne dass diese Darstellungen in irgendeiner Weise einschränkend sein sollten. Als erster Körper 200a ist hier ein Rohr von kreisförmigem Umfang (im Querschnitt) vorgesehen. Die Flügel 1 werden um einen Winkel α von ungefähr 45° bis 55° nach außen geklappt.

Fig. 2c zeigt alternativ einen rohrförmigen Körper 200b, der sich von dem Rohr 200a dadurch unterscheidet, dass sein Querschnitt kleiner ist. Während im Fall der Fig. 2b ein Durchmesser d1 des Körpers 200a größer ist als eine Breite b1 der Vorrichtung, ist vorliegend in Fig. 2b ein Durchmesser d2 des Rohrs 200b kleiner als die Breite b1. In diesem Falle werden die Flügel 1 um einen Winkel von α = ca. 5° bis 20°, z.B. 15°, nach innen geschwenkt.

Fig. 2d zeigt einen plattenförmigen Körper 200d-1, der nunmehr auf den Schrägen 5 aufsitzt, da seine Breite b2 kleiner ist als die Breite b1 der Vorrichtung. Die Höhe passt in Fig. 2d genau zur Vorrichtung insofern, als dass sich die ebene Oberfläche 22 der Flügel genau wieder an die ebene Oberfläche 20 in jeweiligen Seitenbereichen des plattenförmigen Körpers 200d-1 anschmiegen können, die Flügel 1 sind hier um 90° nach innen verschwenkt. Sollte der Körper eine Dicke haben, durch die er etwas nach oben hervorstünde, müsste man die Flügel 1 nicht ganz um 90° schwenken.

Im Falle der Fig. 2e liegt ein Körper 200d-2 ebenfalls auf den Schrägen 5 auf, aber genau an deren Ende bis im Bereich der Schwächung 2. In diesem Fall müssen die Flügel 1 nicht verschwenkt werden, und ihre ebene Innenfläche 22 schmiegt sich an eine seitliche Oberfläche 24 im unteren Bereich des Körpers 200d-2 an.

Im Falle der Fig. 2f, in der nunmehr wieder die vollständige Vorrichtung 100b gezeigt ist, stützen sich die Flügel 1 des unteren Vorrichtungsteils 12 sowohl an einer unteren Innenwandung 26 als auch an einer seitlichen Innenwandung 28 eines Hohlkörpers 200c ab, bei der die Vorrichtung 100b vorliegend genau in eine Öffnung 30 hineinpasst. Abweichend hiervon ist es auch möglich, die Vorrichtung in einen Körper nach Art des Hohlkörpers 200c zu setzen, der nicht wie der Körper 200c von rechteckigem Außenumfang ist, oder dessen Öffnung 30 nicht breiter ist, als es die Breite b1 der Vorrichtung 100b ist.

Die Fig. 3a zeigt eine Abwandlung 100c der Vorrichtung 100b, bei der anstelle einer einzigen Nut zwei Nuten 4a vorgesehen sind, spiegelsymmetrisch um einen Steg 8 in der Mitte herum.

Bei einer weiteren Abwandlungsform 100d gemäß Fig. 3b sind ebenfalls zwei Nuten 4a vorgesehen, getrennt jedoch nicht nur von einem Steg 9, sondern auch von zwischen dem Steg 9 und den Nuten 4a verlaufenden Abschrägungen 14. Die Vorrichtungen 100c und 100d sind spiegelsymmetrisch, was die Rolle ihrer Vorrichtungsteile 10c und 12c oder 10d und 12d angeht.

Bei einer weiteren Abwandlung 100e der Vorrichtung, die in Fig. 3c gezeigt ist, ist der obere Vorrichtungsteil 10c der Vorrichtung 100c und der untere Vorrichtungsteil 12d der Vorrichtung 100d vorgesehen. In diesem Fall ist auch die Höhe h1 des oberen Vorrichtungsteils größer als die Höhe h2 des unteren Vorrichtungsteils. Der Vorrichtungsteil 10c könnte jedoch auch niedriger als der Vorrichtungsteil 12d sein, oder die gleiche Höhe aufweisen.

Insbesondere die Nuten bei den Ausführungsformen gemäß Fig. 3a bis 3c ermöglichen es, die Vorrichtung besonders leicht mithilfe von herkömmlichen Kabelbindern 300a und 300b an Körpern zu befestigen.

Fig. 4a zeigt die Kreuzverbindung von Rundrohren (Rohren mit kreisförmigem Umfangsquerschnitt 200a und 200b), wobei bei dem einen Rundrohr 200a die Situation gemäß Fig. 2b gegeben ist und bei dem anderen Rundrohr 200b von kleinerem Durchmesser die Situation gemäß Fig. 2c gegeben ist. Verwendet wird hier die Vorrichtung 100 aus Fig. 1a, bei der der jeweilige Kabelbinder 300 eben durch die Nut 4 geführt ist, dies sowohl beim oberen Vorrichtungsteil der erste Kabelbinder 300a und beim unteren Vorrichtungsteil der zweite Kabelbinder 300b.

Fig. 4b zeigt die Verbindung eines Rundrohrs 200a mit einem Montageprofil 200e, das eine nahezu kontinuierliche rechteckige Kontur aufweist. Verwendet wird hier die Vorrichtung 100c aus Fig. 3a, aber in einer Form, bei der der obere Vorrichtungsteil 10c und der untere Vorrichtungsteil 12c um 90° zueinander verdreht sind, wie bei der Ausführungsform aus Fig. 1a. Durch die jeweiligen beiden Nuten 4a sind Kabelbinder 300a-1, 300a-2 geführt, die die Vorrichtung 100c' an dem Rundrohr festhalten, und durch entsprechende Nuten auf der Gegenseite sind Kabelbinder 300b-1 und 300b-2 geführt, die die Vorrichtung 100c' an dem Montageprofil 200e halten. Auf diese Weise ist der Verbund aus Montageprofil und Rundrohr gebildet.

Fig. 4c zeigt eine ähnliche Verbindung aus einem Vierkantrohr (hier: Rohr von im Wesentlichen rechteckigem, vorzugsweise quadratischem Querschnitt) 200f und einem Schlauch 200g mittels einer Vorrichtung, 100b, wie sie in Fig. 2a gezeigt ist, wobei hier allerdings anders als in Fig. 1a und 1b ein Wulst 3a, zwei Aussparungen 13a aufweist, um die Durchführung jeweiliger Kabelbinder 300a, 300b zuzulassen.

Fig. 4d zeigt die Verbindung von einem Rundrohr 200a von größerem Durchmesser mit einem Rundrohr 200i von kleinerem Durchmesser und einem Kabel 200h, wobei hier die Vorrichtung 100e aus Fig. 3c verwendet ist. Insbesondere aus der Querschnittsdarstellung in Fig. 4e hierzu ist ersichtlich, dass das kleine Rundrohr 200ih und der Kabelstrang 200h jeweils zwischen dem Steg 9 angeordnet sind. Die Flügel 1 des unteren Vorrichtungsteils 12d müssen nur unwesentlich nach außen geklappt werden. Im oberen Vorrichtungsteil 10c wiederum werden die Flügel, wie auch schon zu Fig. 2b dargestellt, geringfügig nach außen geklappt. Der Kabelbinder 300 hält den gesamten Verbund.

Die nachfolgend erläuterten Vorrichtungen gemäß den Figuren 5a bis 5f haben gemeinsam, dass Haltemittel für einen Kabelbinder in Form zumindest einer jeweiligen Durchführung bereitgestellt sind: Damit die Handhabe der Vorrichtungen bei der Montage erleichtert wird, lässt sich der Kabelbinder in die Durchführung einschieben und so an der Vorrichtung vorläufig halten (dies insbesondere an anderer Stelle als dem späteren Montageplatz des Kabelbinders). Die Hand des Monteurs ist dann für die zu verbindenden Körper frei. Die gezeigten Formen lassen sich im 3D-Druck, Spritzguss oder als Metallformteil herstellen.

Fig. 5a zeigt eine Vorrichtung 100f ähnlich wie die in Fig. 1a, nur dass hier auf jeder Seite (in jedem Vorrichtungsteil) zwei Nuten 4a vorgesehen sind, unter denen die Vorrichtung hohl ist, nach Art eines parallel zu den Nuten 4a und unter den Nuten 4a verlaufenden Rohrs, sodass eine Durchführung für einen Kabelbinder bereitgestellt ist. Fig. 5a zeigt Öffnungen 32 dieser insgesamt vier Durchführungen.

Fig. 5b zeigt eine Vorrichtung 100g ähnlich wie die in Fig. 1a, wobei hier pro Vorrichtungsteil eine Nut 4 vorgesehen ist, unter deren Boden ein beidseitig offener Hohlraum 34 als Durchführung für einen Kabelbinder ausgebildet ist. Der Boden ist als elastische Membran 36 ausgebildet, die vorzugsweise, wie hier dargestellt, konkav, also nach unten gewölbt, ist. Der Hohlraum kann im Ruhezustand der elastischen Membran 36 im Querschnitt kleiner sein als ein Kabelbinder. Drückt man einen solchen hinein, wird die Membran aufgewölbt und sie hält den Kabelbinder klemmend fest. Dies eignet sich besonders, wenn wahlweise mehrere Arten von Kabelbindern mit unterschiedlicher Dicke verwendet werden.

Fig. 5c zeigt eine Vorrichtung 100h ähnlich wie die in Fig. 3a, wobei hier ein Steg 38 an dem Arm 7 vorgesehen ist, wobei in dem Steg 38 ein Paar von Aussparungen 40 ausgebildet ist, die als Durchführung für einen Kabelbinder dienen können.

Fig. 5d zeigt eine Vorrichtung 100h ähnlich wie die in Fig. 3a, wobei hier ein Steg 38' am Arm 7 mittig eine einzige Aussparung 42 bereitstellt. Ferner ersichtlich ist hier die optionale Möglichkeit, den Steg 38' elastisch auszuführen und in Richtung der Durchführung 42 zu wölben. Hierdurch kann in der Durchführung ein Kabelbinder oder eine Rohrschelle verklemmt werden, sodass eine vereinfachte Montage unter Verwendung des Kabelbinders oder der Rohrschelle möglich ist.

Fig. 5e zeigt eine Vorrichtung 100k, bei der im Vergleich zu Fig. 1a auf jeder Seite (in jedem Vorrichtungsteil) zwei Nuten 4a vorgesehen sind. Auch hier sind wieder, analog zur Ausführung nach Figur 5a, eine oder mehrere in Längsrichtung verlaufende Durchführungen 32 vorgesehen, welche zur Aufnahme eines Kabelbinders oder einer Rohrschelle dienen. Während in der Fig. 5a die Durchführungen in der Längsrichtung eine durchgängige Wandung aufweisen, sind in der Figur 5e die Durchführungen 32 nach oben durchbrochen, also in Richtung vom gegenüber angeordneten Verbindungsteil wegweisend, durchbrochen. Anders ausgedrückt ist der die Durchführungen aufweisende Boden nach oben durchbrochen. In der speziellen Variante der Fig. 5e ist der dort ersichtliche Nutgrund 4 in Form einer einzelnen Platte 44 realisiert, sodass der Boden nach oben durch die Platte als den Nutgrund begrenzt ist. In Längsrichtung vor und hinter der Platte ist der Nutgrund weggelassen.

Allgemein kann die Verwendungen der Durchbrechungen bzw. Unterbrechungen den Vorteil haben, dass einerseits die beschriebene vorläufige Haltung des Kabelbinders in der Durchführung möglich ist, andererseits aber auch dennoch das Gesamtgewicht der Vorrichtung reduziert wird.

In einer Variante kann auch hier der Nutgrund elastisch als Membran ausgebildet sein.

Die Vorrichtung 100k unterscheidet sich von den zuvor diskutierten Vorrichtungen optional auch dadurch, dass die an der jeweiligen Nut angeordneten Stufen 6 und auf die Stufen 6 folgenden Abschrägungen/Schrägen 5 durch Rippen 46 ersetzt sind. Diese Rippen 46 erfüllen dieselbe Funktion wie die Stufen und Schrägen und haben auch deren selbe Querschnittsform, sind jedoch aufgrund der Rippenform insbesondere im Spritzguss präziser herstellbar. Beim Spritzgussverfahren erfolgt nach Erkalten der spritzgegossenen Masse ein Schrumpfungsprozess, welcher je nach Materialstärke unterschiedlich ausfällt. Dies kann dazu führen, dass sich die Vorrichtung an einzelnen Stellen von insbesondere massiv durchgehenden Stufen und Schrägen beim Abkühlen verzieht. Durch das Vorsehen der Rippen hingegen ist im Wesentlichen überall eine gleiche Materialstärke gegeben und ein Sich-Verziehen kann dadurch verhindert werden.

Die Fig. 5f zeigt eine Vorrichtung 100l, bei welcher analog zur Figur 5d die Durchführung durch einen Steg 38' mit einer oder mehreren Aussparungen 42 realisiert ist. Auch hier sind entsprechend der zuvor diskutierten Fig. 5e die Stufen und Schrägen durch Rippen 50 ersetzt. Die Rippenstruktur 50 ersetzt somit die Stufen 6 und die Schrägen 5 funktionsgleich.

Es wurde gezeigt, dass durch die Erfindung die Verbindung unterschiedlichster Körper miteinander ermöglicht ist. Grund hierfür ist die Flexibilität der Flügel, die eine Anpassung an unterschiedliche Größen und Breiten von Körpern ermöglichen. Die vorzugsweise vorgesehenen Nuten 4, 4a ermöglichen insbesondere auch das Verbinden mithilfe von Kabelbindern, Bandschellen und dergleichen als zusätzlichem Teil, so dass die Vorrichtung als solche nicht zwingend eine Klemmwirkung auf die zu verbindenden Körper ausüben muss. Dadurch können die Flügel stabiler an dem Rest der Vorrichtung gehalten sein, es kann besonders weiches Kunststoffmaterial verwendet werden und dergleichen weitere Vorteile sind erzielbar.

Die diskutierten Ausführungen mit gewölbter Membran in den Figuren 5b und 5d können in analoger Weise auf die Varianten 5e und 5f übertragen werden.

### Bezugszeichenliste

- 1: Flügel
- 2: Schwächungsstelle
- 3: Wulst
- 3a: Wulst
- 4: Nut
- 4a: Nut
- 4b: Nut
- 5: Schrägen
- 5b: Schrägen
- 6: Stufen
- 6b: Außenstufen
- 7: Arme
- 8: Steg
- 8a': offenes Ende
- 8b': offenes Ende
- 9: Steg
- 10: oberer Vorrichtungsteil
- 10a: oberer Vorrichtungsteil
- 10b: oberer Vorrichtungsteil
- 10c: oberer Vorrichtungsteil
- 10d: oberer Vorrichtungsteil
- 12: unterer Vorrichtungsteil
- 12a: unterer Vorrichtungsteil
- 12b: unterer Vorrichtungsteil
- 12c: unterer Vorrichtungsteil
- 12d: unterer Vorrichtungsteil
- 13: Bereich
- 13a: Aussparung
- 13b: Aussparung
- 14: Abschrägungen
- 15: Grundplatte
- 15a: Grundplatte
- 20: ebene Oberfläche
- 22: innere Oberfläche
- 24: seitliche Oberfläche
- 26: untere Innenwandung
- 28: seitliche Innenwandung
- 30: Öffnung
- 32: Öffnung einer Durchführung
- 34: Hohlraum
- 36: elastische Membran
- 38: Steg
- 38: Steg
- 40: Aussparungen im Steg 38
- 42: mittige Aussparung im Steg 38'
- 44: Platte
- 46: Rippen
- 50: Rippen

- 100: Ausführungsform der Vorrichtung
- 100a: Ausführungsform der Vorrichtung
- 100b: Ausführungsform der Vorrichtung
- 100c: Ausführungsform der Vorrichtung
- 100c': Ausführungsform der Vorrichtung
- 100d: Ausführungsform der Vorrichtung
- 100e: Ausführungsform der Vorrichtung
- 100f: Ausführungsform der Vorrichtung
- 100g: Ausführungsform der Vorrichtung
- 100h: Ausführungsform der Vorrichtung
- 100j: Ausführungsform der Vorrichtung
- 100k: Ausführungsform der Vorrichtung
- 100l: Ausführungsform der Vorrichtung

- 200: Körper
- 200a: Rundrohr
- 200b: Rundrohr
- 200c: Hohlkörper
- 200d: Körper
- 200d-1: plattenförmiger Körper
- 200d-2: Körper
- 200e: Montageprofil
- 200f: quaderförmiges Rohr, Vierkantrohr
- 200g: Schlauch
- 200h: Kabel
- 200i: Rundrohr

- 300: Kabelbinder
- 300a: Kabelbinder
- 300a-1: Kabelbinder
- 300a-2: Kabelbinder
- 300b: Kabelbinder
- 300b-1: Kabelbinder
- 300b-2: Kabelbinder

- A: offene Seite
- A': offene Seite
- B: offene Seite
- B': offene Seite
- X: Längsachse
- Y: Achse

- b1: Breite
- b2: Breite
- d1: Durchmesser
- d2: Durchmesser
- h1: Höhe
- h2: Höhe

- α: Winkel

## Patentansprüche

1. Vorrichtung (100, 100a, 100b, 100c, 100d, 100e,100f, 100g, 100h, 100j, 100k, 100l) zum Verbinden zumindest zweier Körper (200, 200a, 200b, 200c, 200d, 200e, 200f, 200g, 200h, 200i) miteinander, mit einem oberen Vorrichtungsteil (10, 10a, 10b, 10c, 10d) zum Verbinden der Vorrichtung (100, 100a, 100b, 100c, 100d, 100e,100f, 100g, 100h, 100j, 100k, 100l) mit einem ersten Körper (200a, 200b, 200c, 200d, 200f) und einem unteren Vorrichtungsteil (12, 12a, 12b, 12c, 12d) zum Verbinden der Vorrichtung (100, 100a, 100b, 100c, 100d, 100e, 100f, 100g, 100h, 100j, 100k, 100l) mit einem zweiten Körper (200e, 200g, 200h, 200i), wobei der obere Vorrichtungsteil (10, 10a, 10b, 10c, 10d) und der untere Vorrichtungsteil (12, 12a, 12b, 12c, 12d) jeweils auf zwei gegenüberliegenden Seiten (A, B; A', B') offen sind, um die Verbindung mit einem ersten bzw. zweiten Körper (200, 200a, 200b, 200c, 200d, 200e, 200f, 200g, 200h, 200i) zu ermöglichen, der länger als die Vorrichtung (100, 100a, 100b, 100c, 100d, 100e,100f, 100g, 100h, 100j, 100k, 100l) ist, und zwei Seitenarme (7) zum zumindest teilweisen Umschließen eines jeweiligen Körpers aufweisen, **dadurch gekennzeichnet, dass** beide Seitenarme (7) einen beweglichen Flügel (1) aufweisen, welche eine Anpassung der Vorrichtung (100, 100a, 100b, 100c, 100d, 100e, 100f, 100g, 100h, 100j, 100k, 100I) an unterschiedliche Körper (200, 200a, 200b, 200c, 200d, 200e, 200f, 200g, 200h, 200i) ermöglichen.

2. Vorrichtung (100, 100a, 100b, 100c, 100d, 100e, 100f, 100g, 100h, 100j, 100k, 100l) nach Anspruch 1, bei dem jeder Flügel (1) aufgrund einer Materialschwächung (2) beweglich ist.

3. Vorrichtung (100, 100a, 100b, 100c, 100d, 100e) nach einem der Ansprüche 1 bis 2, **dadurch gekennzeichnet, dass** die Vorrichtung unter Verwendung von Metall hergestellt ist.

4. Vorrichtung (100, 100a, 100b, 100c, 100d, 100e) nach Anspruch 3, **dadurch gekennzeichnet, dass** jeder Flügel (1) aufgrund einer an einem Fuß vorgenommenen Prägung beweglich ist.

5. Vorrichtung (100a) nach einem der Ansprüche 1 bis 4, **dadurch gekennzeichnet, dass** sich die Grundplatte über einen Teil der Breite der Vorrichtung erstreckt und jeweils einen seitlichen Wulst (3) für die Aufnahme einer Bandschelle oder eines Kabelbinders ausbildet.

6. Vorrichtung (100f, 100g, 100h, 100j, 100k, 100l) nach einem der vorhergehenden Ansprüche, mit zumindest einem Haltemittel in dem oberen und/oder in dem unteren Vorrichtungsteil (10, 10a, 10b; 12, 12a, 12b) für einen Kabelbinder oder eine Bandschelle.

7. Vorrichtung (100f, 100g, 100h, 100j, 100k, 100l) nach Anspruch 6, wobei das Haltemittel zumindest eine Durchführung (34, 40) umfasst.

8. Vorrichtung (100f, 100g, 100k) nach Anspruch 7, bei der eine Durchführung der zumindest einen Durchführung (34) unterhalb eines Bodens des jeweiligen Vorrichtungsteils ausgebildet ist.

9. Vorrichtung (100f, 100g, 100k) nach Anspruch 7 oder 8, bei welcher der Boden eine Nut (4) aufweist, wobei die Nut durch eine elastische Membran (36) bereitgestellt ist, welche vorzugsweise nach unten in Richtung der Durchführung (34, 40) gewölbt ist.

10. Vorrichtung (100f, 100g, 100k) nach einem der Ansprüche 8-9, wobei der Boden in der jeweiligen Längsrichtung des oberen Vorrichtungsteils (10, 10a, 10b, 10c, 10d) und/oder des unteren Vorrichtungsteils (12, 12a, 12b, 12c, 12d) zumindest eine Unterbrechung aufweist.

11. Vorrichtung (100f, 100g) nach einem der Ansprüche 6 bis 7, bei der eine Durchführung der zumindest einen Durchführung als Aussparung (40) an einem Steg (38) ausgebildet ist, wobei der Steg vorzugsweise an der Außenseite der Vorrichtung angeordnet ist, sich insbesondere in der Längsrichtung an der Außenseite der Vorrichtung erstreckt, . wobei optional der Steg durch eine elastische Membran (36) bereitgestellt ist, welche vorzugsweise in Richtung der Durchführung (34, 40) gewölbt ist.

12. Vorrichtung (100k, 100l) nach einem der Ansprüche 7 bis 11, wobei die Stufe (6) und/oder die Schräge (5) durch eine Rippenstruktur mit einer Vielzahl von Rippen (46, 50) realisiert ist.

13. Verbund eines ersten Körpers (200a) mit einem zweiten Körper (200), wobei der erste und der zweite Körper mit einer Vorrichtung nach einem der Ansprüche 1 bis 12 verbunden sind.

14. Verbund nach Anspruch 13, **dadurch gekennzeichnet, dass** der erste Körper ein Rohr (20a) mit kreisförmigem Umfangsquerschnitt ist, der erste Körper breiter als die Vorrichtung ist und die zwei beweglichen Flügel (1) des ersten Vorrichtungsteils nach außen geklappt sind.

15. Verbund nach Anspruch 13, **dadurch gekennzeichnet, dass** der erste Körper ein Rohr (20a) mit kreisförmigem Umfangsquerschnitt ist, der erste Körper schmäler als die Vorrichtung ist und die zwei beweglichen Flügel (1) des ersten Vorrichtungsteils nach innen geklappt sind.

## Claims

1. A device (100, 100a, 100b, 100c, 100d, 100e, 100f, 100g, 100h, 100j, 100k, 100l) for connecting at least two bodies (200, 200a, 200b, 200c, 200d, 200e, 200f, 200g, 200h, 200i) to one another, with an upper device part (10, 10a, 10b, 10c, 10d) for connecting the device (100, 100a, 100b, 100c, 100d, 100e, 100f, 100g, 100h, 100j, 100k, 100I) with a first body (200a, 200b, 200c, 200d, 200f) and a lower device part (12, 12a, 12b, 12c, 12d) for connecting the device (100, 100a, 100b, 100c, 100d, 100e, 100f, 100g, 100h, 100j, 100k, 100I) to a second body (200e, 200g, 200h, 200i), wherein the upper device part (10, 10a, 10b, 10c, 10d) and the lower device part (12, 12a, 12b, 12c, 12d) are each open on two opposite sides (A, B; A', B') to enable the connection to a first or second body (200, 200a, 200b, 200c, 200d, 200e, 200f, 200g, 200h, 200i) which is longer than the device (100, 100a, 100b, 100c, 100d, 100e, 100f, 100g, 100h, 100j, 100k, 100I) and two side arms (7) for at least partially enclosing a respective body, **characterized in that** both side arms (7) have a movable wing (1) which enable adapting the device (100, 100a, 100b, 100c, 100d, 100e, 100f, 100g, 100h, 100j, 100k, 1001) to different bodies (200, 200a, 200b, 200c, 200d, 200e, 200f, 200g, 200h, 200i).

2. The device (100, 100a, 100b, 100c, 100d, 100e, 100f, 100g, 100h, 100j, 100k, 1001) according to claim 1, wherein each wing (1) is movable due to a weakening (2) of the material.

3. The device (100, 100a, 100b, 100c, 100d, 100e) according to any one of claims 1 to 2, **characterized in that** the device is made using metal.

4. The device (100, 100a, 100b, 100c, 100d, 100e) according to claim 3, **characterized in that** each wing (1) is movable due to an embossing made on a foot.

5. The device (100a) according to any one of claims 1 to 4, **characterized in that** the base plate extends over part of the width of the device and forms a respective lateral bulge (3) for receiving a band clamp or a cable tie.

6. The device (100f, 100g, 100h, 100j, 100k, 100l) according to any one of the preceding claims, having at least one holding means in the upper and/or in the lower device part (10, 10a, 10b; 12, 12a, 12b) for a cable tie or a band clamp.

7. The device (100f, 100g, 100h, 100j, 100k, 100I) according to claim 6, wherein the holding means comprises at least one lead-through (34, 40).

8. The device (100f, 100g, 100k) according to claim 7, wherein a lead-through of the at least one lead-through (34) is formed below a bottom of the respective device part.

9. The device (100f, 100g, 100k) according to claim 7 or 8, wherein the bottom comprises a groove (4), the groove being provided by an elastic membrane (36) which is preferably curved downwards in the direction of the lead-through (34, 40).

10. The device (100f, 100g, 100k) according to any one of claims 8-9, wherein the bottom has at least one interruption in the respective longitudinal direction of the upper device part (10, 10a, 10b, 10e, 10d) and/or the lower device part (12, 12a, 12b, 12c, 12d).

11. The device (100f, 100g) according to any one of claims 6 to 7, wherein a lead-through of the at least one lead-through is formed as a recess (40) on a bridge (38), wherein the bridge is preferably arranged on the outside of the device, in particular extends in the longitudinal direction on the outside of the device, wherein optionally the bridge is provided by an elastic membrane (36), which is preferably curved in the direction of the lead-through (34, 40).

12. The device (100k, 100l) according to any one of claims 7 to 11, wherein the step (6) and/or the incline (5) is realized by a rib structure with a plurality of ribs (46, 50).

13. A composite of a first body (200a) and a second body (200), wherein the first and second bodies are connected to a device according to any one of claims 1 to 12.

14. The composite according to claim 13, **characterized in that** the first body is a tube (20a) with a circular circumferential cross-section, the first body is wider than the device and the two movable wings (1) of the first device part are folded outwards.

15. The composite according to claim 13, **characterized in that** the first body is a tube (20a) with a circular circumferential cross-section, the first body is narrower than the device and the two movable wings (1) of the first device part are folded inwards.

## Revendications

1. Dispositif (100, 100a, 100b, 100c, 100d, 100e, 100f, 100g, 100h, 100j, 100k, 1001) pour relier au moins deux corps (200, 200a, 200b, 200c, 200d, 200e, 200f, 200g, 200h, 200i) entre eux, avec une partie supérieure de dispositif (10, 10a, 10b, 10c, 10d) pour relier le dispositif (100, 100a, 100b, 100c, 100d, 100e, 100f, 100g, 100h, 100j, 100k, 1001) à un premier corps (200a, 200b, 200c, 200d, 200f) et une partie inférieure de dispositif (12, 12a, 12b, 12c, 12d) pour relier le dispositif (100, 100a, 100b, 100c, 100d, 100e, 100f, 100g, 100h, 100j, 100k, 1001) à un deuxième corps (200e, 200g, 200h, 200i), la partie supérieure du dispositif (10, 10a, 10b, 10c, 10d) et la partie inférieure du dispositif (12, 12a, 12b, 12c, 12d) ayant chacune deux côtés opposés (A, B ; A', B') afin d'assurer la liaison avec un premier et un second élément, respectivement. deuxième corps (200, 200a, 200b, 200c, 200d, 200e, 200f, 200g, 200h, 200i) qui est plus long que le dispositif (100, 100a, 100b, 100c, 100d, 100e, 100f, 100g, 100h, 100j, 100k, 1001), et comprenant deux bras latéraux (7) pour entourer au moins partiellement un corps respectif, **caractérisé en ce que** les deux bras latéraux (7) présentent une aile mobile (1), qui permettent une adaptation du dispositif (100, 100a, 100b, 100c, 100d, 100e, 100f, 100g, 100h, 100j, 100k, 1001) à différents corps (200, 200a, 200b, 200c, 200d, 200e, 200f, 200g, 200h, 200i).

2. Dispositif (100, 100a, 100b, 100c, 100d, 100e, 100f, 100g, 100h, 100j, 100k, 1001) selon la revendication 1, dans lequel chaque aile (1) est mobile en raison d'un affaiblissement du matériau (2).

3. Dispositif (100, 100a, 100b, 100c, 100d, 100e) selon l'une quelconque des revendications 1 à 2, **caractérisé en ce que** le dispositif est fabriqué en utilisant du métal.

4. Dispositif (100, 100a, 100b, 100c, 100d, 100e) selon la revendication 3, **caractérisé en ce que** chaque aile (1) est mobile en raison d'une empreinte réalisée sur un pied.

5. Dispositif (100a) selon l'une quelconque des revendications 1 à 4, **caractérisé en ce que** la plaque de base s'étend sur une partie de la largeur du dispositif et **en ce que**, respectivement forme un bourrelet latéral (3) destiné à recevoir un collier de serrage ou un serre-câble.

6. Dispositif (100f, 100g, 100h, 100j, 100k, 1001) selon l'une quelconque des revendications précédentes, comprenant au moins un moyen de maintien dans la partie supérieure et/ou dans la partie inférieure (10, 10a, 10b ; 12, 12a, 12b) du dispositif d'un collier de serrage ou d'une bande.

7. Dispositif (100f, 100g, 100h, 100j, 100k, 1001)selon la revendication 6, dans lequel le moyen de maintien comprend au moins un passage (34, 40).

8. Dispositif (100f, 100g, 100k) selon la revendication 7, dans lequel un passage de l'au moins une traversée (34) est formé en dessous d'un fond de la partie de dispositif respective.

9. Dispositif (100f, 100g, 100k) selon la revendication 7 ou 8, dans lequel le fond présente une rainure
(4), la rainure étant fournie par une membrane élastique (36) qui est de préférence bombée vers le
bas en direction du passage (34, 40).

10. Dispositif (100f, 100g, 100k) selon l'une quelconque des revendications 8 à 9, dans lequel le fond présente au moins une interruption dans la direction longitudinale respective de la partie supérieure du dispositif (10, 10a, 10b, 10c, 10d) et/ou de la partie inférieure du dispositif (12, 12a, 12b, 12c, 12d).

11. Dispositif (100f, 100g) selon l'une quelconque des revendications 6 à 7, dans lequel une traversée de ladite au moins une traversée est réalisée sous la forme d'un évidement (40) sur une âme (38), ladite âme étant de préférence disposée sur l'extérieur du dispositif, s'étendant en particulier dans la direction longitudinale sur l'extérieur du dispositif, . dans lequel, en option, ladite âme est fournie par une membrane élastique (36), qui est de préférence bombée en direction de ladite traversée (34, 40).

12. Dispositif (100k, 1001) selon l'une quelconque des revendications 7 à 11, dans lequel la marche (6) et/ou la pente (5) est réalisée par une structure nervurée comprenant une pluralité de nervures (46, 50).

13. Association d'un premier corps (200a) à un deuxième corps (200), les premier et deuxième corps étant associés à un dispositif selon l'une quelconque des revendications 1 à 12.

14. Composé selon la revendication 13, **caractérisé en ce que** le premier corps est un tube (20a) de section transversale périphérique circulaire, le premier corps est plus large que le dispositif et les deux ailes mobiles (1) de la première partie du dispositif sont repliées vers l'extérieur.

15. Composé selon la revendication 13, **caractérisé en ce que** le premier corps est un tube (20a) de section transversale périphérique circulaire, le premier corps est plus étroit que le dispositif et les deux ailes mobiles (1) de la première partie du dispositif sont repliées vers l'intérieur.
